(19) Europäisches Patentamt
European Patent Office
Office européen des brevets

(11) Veröffentlichungsnummer: **0 321 919 B1**

(12) **EUROPÄISCHE PATENTSCHRIFT**

(45) Veröffentlichungstag der Patentschrift: **09.02.94**

(51) Int. Cl.$^5$: **C09B 69/00**, C08K 5/03

(21) Anmeldenummer: **88121275.7**

(22) Anmeldetag: **20.12.88**

# (54) Neue Pigmente und ihre Verwendung.

(30) Priorität: **22.12.87 DE 3743619**
**17.11.88 DE 3838814**

(43) Veröffentlichungstag der Anmeldung:
**28.06.89 Patentblatt 89/26**

(45) Bekanntmachung des Hinweises auf die Patenterteilung:
**09.02.94 Patentblatt 94/06**

(84) Benannte Vertragsstaaten:
**CH DE FR GB IT LI**

(56) Entgegenhaltungen:
**EP-A- 0 034 725**

(73) Patentinhaber: **HOECHST AKTIENGESELLSCHAFT**

**D-65926 Frankfurt(DE)**

(72) Erfinder: **Dietz, Erwin, Dr.**
**St. Matthäus-Strasse 7**
**D-6233 Kelkheim Taunus(DE)**
Erfinder: **Kapaun, Gustav, Dr.**
**Am Schellberg 34**
**D-6232 Bad Soden am Taunus(DE)**
Erfinder: **Kappert, Michael, Dr.**
**Am Flachsland 56**
**D-6233 Kelkheim Taunus(DE)**
Erfinder: **Prokschy, Frank, Dr.**
**Drosselweg 3**
**D-6230 Frankfurt am Main 80(DE)**
Erfinder: **Kroh, Adolf**
**Vorderstrasse 27**
**D-6251 Selters(DE)**
Erfinder: **Urban, Manfred**
**Steigerwaldstrasse 2a**
**D-6200 Wiesbaden(DE)**

EP 0 321 919 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Pigmente mit verbesserten Flockungsstabilitäten und rheologischen Eigenschaften sowie deren Verwendung zum Pigmentieren von hochmolekularen Materialien.

Bei der Dispergierung von Pigmenten in hochmolekularen Materialien können eine Vielzahl von Problemen auftreten. Bei stark agglomerierenden und schwer dispergierbaren Pigmenten bleibt die Dispergierung unvollständig, und die optimale Feinheit und Farbstärke werden nicht erreicht.

Unvollständig dispergierte Agglomerate sowie große Teilchen können bei der Weiterverarbeitung stören, insbesondere können sie in niedrigviskosen Systemen (Lacken und Druckfarben) zu Sedimentationsproblemen fuhren. Desweiteren können Flockulationen bei der Dispergierung, Lagerung oder Weiterverarbeitung zu unerwünschten rheologischen Veränderungen des Systems sowie zu Oberflächenstörungen, Farbstärke- und Glanzverlusten eines applizierten Films führen.

Es sind aus der DE-OS 3106906 und JP 58/145762, JP 58/225159 und JP 58/225160 Pigmentzusammensetzungen bekannt, die eine verbesserte Flockungsstabilität und gunstigere rheologische Eigenschaften in Lacksystemen aufweisen. Die zu diesem Zweck eingesetzten Pigmentderivate müssen jedoch in einem mehrstufigen Prozeß hergestellt werden. Die dort beschriebene Verfahrensweise führt in mehreren Fällen zu unbefriedigenden Ausbeuten und Resultaten und ist bei einigen Pigmentklassen nicht anwendbar. Außerdem haben die dort genannten Verbindungen andere Strukturen, in dem zu ihrer Herstellung aliphatische Amine, im Gegensatz zu aromatischen Aminen, eingesetzt werden. Die Verknüpfungen der Methylengruppen erfolgen einerseits beispielsweise über CO- und $SO_2$-Gruppen, andererseits am Stickstoff der aliphatischen Amine.

Im Gegensatz hierzu ist bei den erf indungsgemäßen Pigmenten die Methylengruppe einerseits direkt an den farbgebenden Pigmentrest gebunden. Ferner werden gemäß den vorstehend genannten japanischen Offenlegungsschriften Pigmente mit chemisch nicht verwandten Pigmentderivaten kombiniert.

Ziel der vorliegenden Erfindung waren Pigmente mit verbesserter Flockungsstabilität und rheologischen Eigenschaften, die zum Färben von hochmolekularen Materialien geeignet sind.

Gegenstand der vorliegenden Anmeldung sind neue Pigmente der allgemeinen Formel I

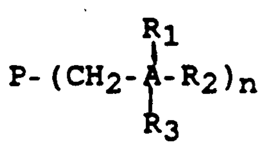

(I)

in welcher A einen fünf- oder sechsgliedrigen aromatischen, ggf. kondensierten Heterocyclus darstellt, welcher ein bis drei Heteroatome aus der Reihe Stickstoff und/oder Sauerstoff und/oder Schwefel enthält und welcher über ein Kohlenstoffatom an die Methylengruppe gebunden ist, $R_1$, $R_2$, Wasserstoff, Alkyl $C_1$-$C_4$, Alkylen $C_2$ oder Aryl, beispielsweise Phenyl, bedeutet, wobei $R_1$ und $R_2$ gemeinsam auch einen aliphatischen oder aromatischen Ring, beispielsweise einen Benzolring darstellen können, $R_3$ Wasserstoff, Alkyl $C_1$-$C_4$, Hydroxyalkyl $C_1$-$C_3$ oder Alkylen $C_2$ bedeutet und wobei die Alkylgruppen linear oder verzweigt sein können, P den Rest eines polycyclischen Pigments darstellt und n eine Zahl von 0,001 bis 0,2 darstellt.

P steht als Rest eines polycylischen Pigmentes, vorzugsweise für einen Anthrachinon-, Anthrapyrimidin-, Anthanthron-, Chinacridon, Chinophthalon, Diketopyrrolopyrrol, Dioxazin-, Flavanthron, Indanthron-Isoindolin-, Isoindolinon, Isoviolanthron, Perinon-Perylen, Phthalocyanin, Pyranthron- oder Thioindigo-Rest P kann auch der Rest eines Mischkristalls aus polycyclischen Pigmenten, insbesondere aus der Gruppe der vorstehend genannten Pigmentklassen sein.

Als fünfgliedrige aromatische Heterocyclen A kommen vorzugsweise Furan, Thiophen, Pyrrol, Pyrazol, Thiazole, Oxazole, Triazole und insbesondere Imidazol in Betracht.

Bevorzugte kondensierte Heterocyclen sind Thionaphthen, Benzoxazol, Benzthiazol, Benzimidazol, Benztriazol und insbesondere Indol. Während n in der obengenannten Formel (I) allgemein 0,001 bis 0,2 ist, sind bevorzugte Pigmente solche mit n = 0,01 bis 0,1 und besonders bevorzugt solche mit n = 0,02 bis 0,08.

Der optimale Wert für n ist abhängig von der chemischen Konstitution, von Kristall- und Oberflächeneigenschaften des Pigmentes sowie den Eigenschaften des Anwendungsmediums und muß für jede Kombination Pigment/Anwendungsmedium durch Versuche im Einzelfall ermittelt werden. Zu geringe oder zu hohe Werte von n führen nicht zu den optimalen Pigmenteigenschaften.

Nachstehend ist unter dem Begriff "Pigment" ein Produkt der genannten Formel (I) zu verstehen, in welcher n ≦ 0,2 ist, und unter dem Begriff "Pigmentderivat" ein Produkt der Formel (I), in welcher n > 0,2 ist.

Die durch aromatische, ggf. kondensierte Methylenheterocyclen substituierten Pigmentderivate der vorstehend genannten allgemeinen Formel (I) lassen sich auf folgenden Wegen herstellen:
Sie können nach bekannten Verfahren entweder aus Hydroxymethylheterocyclen oder aus Heterocyclen in Gegenwart von Formaldehyd abgebenden Substanzen, wie z.B. Paraformaldehyd oder Trioxan im sauren Reaktionsmedium, wie z.B. Schwefelsäure, Oleum oder Polyphosphorsäure in Gegenwart der genannten Pigmente hergestellt werden, wobei es vorteilhaft ist, eine Säure zu wählen, in der das jeweilige Pigment löslich ist.

Bei der Verwendung von konz. Schwefelsäure oder Oleum als Kondensationsmedium können in geringem Umfang Sulfonsäuregruppen eingebaut werden. Bei Heterocyclen, die mehr als eine Hydroxymethylgruppe enthalten oder bei einem Überschuß an Formaldehyd, ist es möglich, daß die Hydroxymethylgruppen eines Heterocyclus mehrfach mit Pigmentresten reagieren.

Es ist auch möglich, den Methylenheterocyclus als Substituent in einer Pigmentvorstufe einzuführen und daraus dann das erfindungsgemäße Pigment herzustellen.

Der Substitutionsgrad n des polycyclischen Pigments P kann auf dem direkten Weg erreicht werden. Es kann aber auch ein Pigmentderivat der Formel I hergestellt und in einem weiteren Schritt auf den endgültigen Substitutionsgrad n eingestellt werden. Diese Einstellung des Substitutionsgrades n kann bei einem nachfolgenden Verfahrensschritt (Feinverteilung, Finish, Naß- oder Trockenmahlung, Endmischung) erfolgen.

Die Einstellung des Substitutionsgrads n im Rahmen einer Feinverteilung kann vor oder nach einem Feinverteilungsprozeß oder während eines Feinverteilungsprozesses erfolgen. Die Feinverteilung kann durch einen mechanischen Prozeß, beispielsweise eine Naß- oder Trockenmahlung oder durch einen chemischen Prozeß, beispielsweise Auflösen in starken Säuren oder Laugen und anschließendes Ausfällen oder Umküpen, erfolgen.

Die Endeinstellung kann auch bei einem Finishprozeß in einem wäßrigen und/oder lösemittelhaltigen System vorgenommen werden. Die Zugabe des Pigmentderivates der Formel I kann in Form der freien Base oder in Form des Salzes, beispielsweise in gelöster Form in geeigneten Lösemitteln, unter geeigneter Steuerung des pH-Wertes erfolgen.

Bevorzugt ist die Isolierung des Pigmentes in schwach alkalischem Medium bei einem pH-Wert von etwa 8 bis etwa 11.

Die Endeinstellung kann auch durch trockenes Vermischen, beispielsweise in einer Mühle, erfolgen.

Zur Erzielung optimaler Eigenschaften der Pigmente in der Endzusammensetzung müssen sie in einem Prozeß einer intensiven mechanischen Beanspruchung unterzogen werden (Stoß-, Prall- oder Scherbeanspruchung). Diese Behandlung kann bei der Feinverteilung, beim Finish oder bei der Dispergierung im Anwendungsmedium stattfinden, wobei die entscheidenden Eigenschaften erst bei dieser mechanischen Beanspruchung endgültig geprägt werden.

Die erfindungsgemäßen Pigmente eignen sich besonders zum Pigmentieren von hochmolekularen organischen Materialien. Hochmolekulare organische Materialien, die mit den Produkten der genannten Formel I pigmentiert werden können, sind beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polacrylsäureester, Polyamide, Polyurethane oder Polyester, Gummi, Casein, Silikon und Silikonharze, einzeln oder in Mischungen.

Es spielt dabei keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Pigmente als Toner oder in Form von Präparationen oder Dispersionen einzusetzen. Bezogen auf das zu pigmentierende hochmolekulare organische Material setzt man die Verbindungen der genannten Formel I in einer Menge von vorzugsweise 0,1 bis 10 Gew.-% ein.

Besonders bevorzugte Lacksysteme sind Einbrennlacke aus der Klasse der Alkydmelaminharz- oder Acrylmelaminharzlacke sowie Zweikomponentenlacke auf Basis polyisocyanatvernetzbarer Acrylharze. Von der Vielzahl der Druckfarben sind Druckfarben auf Basis Nitrocellulose besonders zu erwähnen.

Die erfindungsgemäßen Pigmente sind in vielen Anwendungsmedien leicht und bis zu hohen Feinheiten dispergierbar.

Diese Dispersionen besitzen eine hohe Flockungsstabilität und zeigen hervorragende rheologische Eigenschaften selbst bei hoher Pigmentierung. Mit ihnen lassen sich Lackierungen und Drucke von hoher Farbstärke, hohem Glanz und hoher Transparenz mit hervorragenden Echtheitseigenschaften herstellen.

Im Gegensatz zu den in der EP 0034725 beschriebenen imidazolgruppenhaltigen Farbstoffen, die in Wasser oder organischen Säuren löslich sind, handelt es sich bei den erf indungsgemäßen Pigmenten um in solchen Medien unlösliche Verbindungen, die in einer Phase vorliegen und die auch in den üblichen organischen Lösemitteln nicht in Lösung gehen und somit hervorragende Echtheiten aufweisen. Zur Prüfung der Eigenschaften wurden aus der Vielzahl der bekannten Systeme ein Alkyd-Melaminharz-Lack (AM) auf Basis eines mittelöligen, nichttrocknenden Alkydharzes aus synthetischen Fettsäuren und Phthalsäureanhydrid und eines butanolveretherten Melaminharzes und Anteilen eines nichttrocknenden Alkydharzes auf Basis von Ricinensäure (kurzölig) sowie ein Acrylharzeinbrennlack auf Basis einer nichtwäßrigen Dispersion (TSA-NAD) ausgewählt.

Die Rheologie des Mahlguts nach der Dispergierung wird anhand der folgenden fünfstufigen Skala beurteilt:

5 dünnflüssig
4 flüssig
3 dickflüssig
2 leicht gestockt
1 gestockt

Zur weiteren Charakterisierung des Mahlgutes wurden von einigen Beispielen Fließkurven im Rotationsviskosimeter Rotavisko RV 3 der Firma Haake aufgenommen.

Nach dem Verdünnen des Mahlguts auf die Pigmentendkonzentration kann die Viskosität mit dem Viskospatel nach Rossmann, Typ 301 der Firma Erichsen beurteilt werden.

Glanzmessungen erfolgten unter einem Winkel von 20° nach DIN 67530 (ASTMD 523) mit dem "multigloss"-Glanzmeßgerät der Firma Byk-Mallinckrodt.

In den nachstehenden Beispielen bedeuten Teile Gewichtsteile.

**Beispiel 1**

**Herstellung**

20,6 Teile C.I. Pigment Orange 43, 71105 (Perinon) werden bei 0°C in 250 Teile Schwefelsäuremonohydrat eingetragen. Dann werden in Portionen 3,7 Teile 4-Methyl-5-hydroxymethylimidazolhydrochlorid eingetragen. Es wird 4 Stunden bei 105°C nachgerührt. Die Reaktionslösung gibt man nach dem Abkühlen auf Wasser und Eis. Mit Natronlauge stellt man auf pH 10. Das ausgefallene Produkt wird abgesaugt, salzfrei gewaschen und getrocknet. Gewonnen werden 22,6 Teile des Produktes der Formel

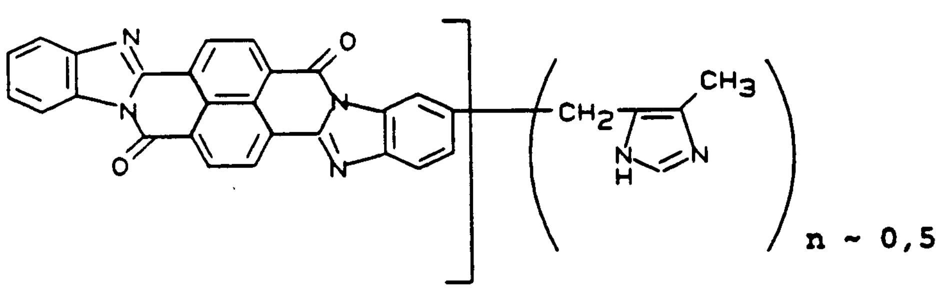

Die vorstehend genannte Formel leitet sich aus dem H[1]-NMR-Spektrum in $D_2SO_4$ aus der Lage und den Intensitäten der aliphatischen und der aromatischen Protonen ab. 9,5 Teile C.I. Pigment Orange 43 und 0,5 Teile der Verbindung der vorstehend genannten Formel werden gemeinsam vermahlen.

Man erhält so die Verbindung der vorstehenden Formel mit n ~ 0,025.

**Anwendung**

Ein handelsüblicher AM-Lack wird mit der Verbindung der vorstehend genannten Formel 12 %ig pigmentiert. Nach einer Dispergierung von 45 Minuten mit Glasperlen von 3 mm Ø wird die Rheologie des Mahlgutes mit der Note 4 bewertet, während ein entsprechend hergestelltes Mahlgut mit dem unsubstituierten Pigment eine Rheologie der Note 1 zeigt.

Der 4 %ig pigmentierte Volltonlack besitzt eine Viskosität von 3,6 sec. im Vergleich zu 6,2 sec. beim unsubstituierten Pigment. Der Volltonlack wird durch Zugabe eines n-Butanol-Xylol-Gemisches (1 : 1) auf eine Viskosität eingestellt, die einer Auslaufzeit im Fordbecher (Düse 4 mm ⌀) von 22 sec. entspricht. Dann wird der Lack auf eine Folie gegossen und nach dem Ablüften 30 Minuten bei 140 °C eingebrannt. Der Glanzwert beträgt 86 im Vergleich zu 42 beim unsubstituierten Pigment.

**Rub-out-Test**

Der Volltonlack wird mit 25 %igem Weißlack so verdünnt, daß das Verhältnis Bunt- zu Weißpigment 1 : 10 beträgt.

Nach einer Einrührzeit von 3 Minuten wird das Prüfmedium mit einem Filmziehgerät auf weißen Kunstdruckkarton aufgezogen. Zur Prüfung der Flockungsstabilität wird ein Teil des Films nach kurzem Antrocknen mit einem Pinsel oder mit dem Finger nachgerieben. Fand beim Einrühren ein Flockungsprozeß statt, so wird das ausgeflockte Pigment durch die auf den Film ausgeübten Scherkräfte zumindest zum Teil entagglomerisiert. Die nachgeriebene Fläche ist dann kräftiger gefärbt als die nicht nachbehandelte Fläche.

Im Falle des erfindungsgemäßen Pigments fand kein Flockungsprozeß statt, während beim unsubstituierten Pigment starke Flockungserscheinungen zu erkennen sind.

**Beispiel 2**

**Herstellung**

60 Teile feuchter Filterkuchen von C.I. Pigment Orange 43, 71105 (Perinon) (≙ 20 Teile Trockenprodukt) werden mit 9,8 Teilen feuchtem Filterkuchen der Verbindung der in Beispiel 1 genannten Formel (≙ 0,8 Teile Trockenprodukt) mit 327 Teilen Isobutanol 3 Stunden auf 90 °C erhitzt und dann mit Natronlauge auf pH 9 gestellt. Nach der destillativen Entfernung von Isobutanol wird abgesaugt, neutral gewaschen und bei 60 °C getrocknet. Gewonnen werden 20,1 Teile eines Produktes der in Beispiel 1 genannten Formel mit n ~ 0,02.

**Anwendung**

Wird das Produkt analog wie in Beispiel 1 beschrieben geprüft, so erhält man folgende Werte:

| | Beispiel 2 | Vergleich |
|---|---|---|
| Rheologie | 5 | 1 |
| Glanz | 86 | 42 |

Beide Lackierungen weisen eine einwandfreie Überlackierbarkeit auf. Beide Pigmente sind in verdünnter Essigsäure unlöslich. Im Gegensatz dazu sind Produkte mit n = 1 und 2 in verdünnter Essigsäure gut löslich.

**Beispiel 3**

**Herstellung und Anwendung**

Ein Mischkristall bestehend aus 8,7 Teilen C.I. Pigment Red 194, 71100 (Perinon), 1,0 Teil C.I. Pigment Orange 43 (Perinon) und 0,3 Teilen der Verbindung der in Beispiel 1 genannten Formel werden vermahlen.

Man erhält ein Produkt der Formel

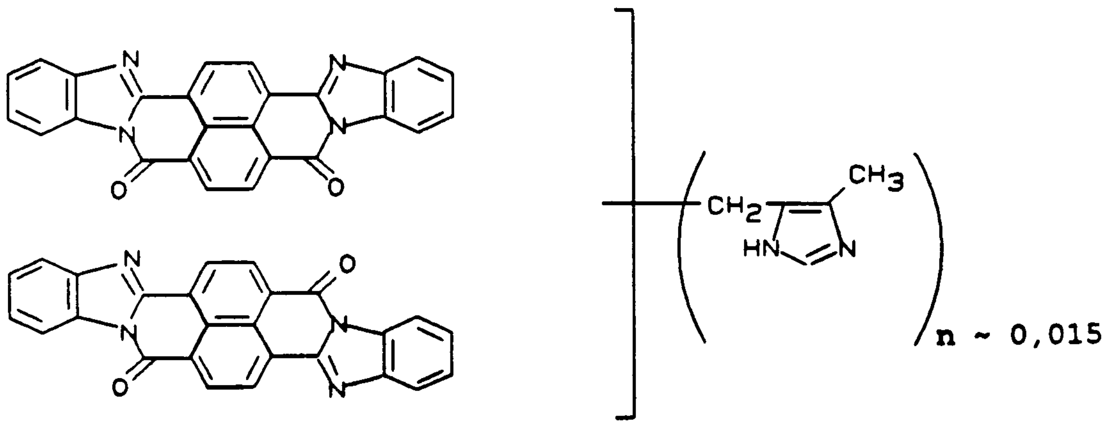

Bei der Ausprüfung erhält man in 8 %iger Pigmentierung im AM-Lack folgende Ergebnisse:

| | Beispiel 3 | Vergleich |
|---|---|---|
| Viskosität<br>Glanz | 3,6 sec<br>80 | 5,8 sec<br>40 |

Die Lackierungen sind transparenter und farbstärker als der Vergleich.

**Beispiel 4**

**Herstellung**

Durch Umsetzung von 28,6 Teilen Diketopyrrolopyrrol mit 13,4 Teilen 4-Methyl-5-hydroxymethylimidazolhydrochlorid in Schwefelsäuremonohydrat erhält man die Verbindung der Formel

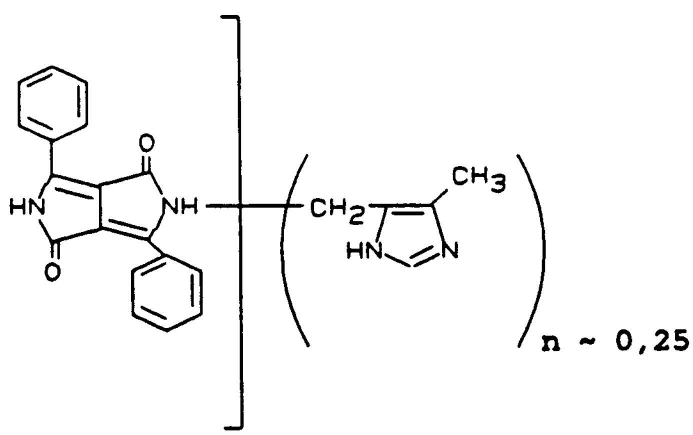

9,5 Teile Diketopyrrolopyrrolpigment und 0,5 Teile der Verbindung der obigen Formel werden vermahlen.

Man erhält so die Verbindung der vorstehenden Formel mit n ~ 0,013.

Bei der Ausprüfung erhält man in 5 %iger Pigmentierung im AM-Lack transparentere und farbstärkere Lackierungen als bei Verwendung des unsubstituierten Pigments.

| | Beispiel 4 | Vergleich |
|---|---|---|
| Rheologie<br>Glanz | 5<br>86 | 2<br>27 |

**Beispiel 5**

50 Teile Perylen-3,4,9,10-tetracarbonsäuredianhydrid in Form des feuchten Preßkuchens werden in 1 441 Teilen Wasser angerührt. Danach werden 27,6 Teile feuchter Preßkuchen (entsprechend 5 Teilen trocken) der Verbindung der Formel

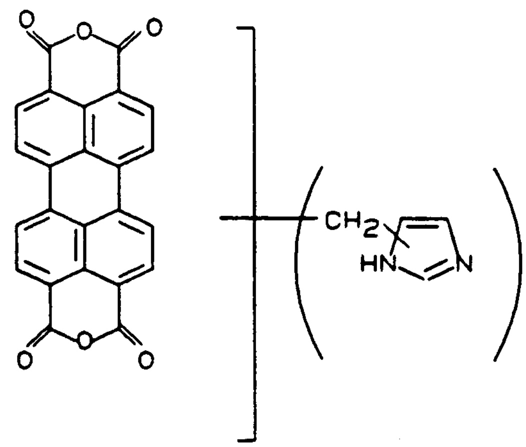

n ~ 0,4

zugegeben, die durch Umsetzung von Perylen-3,4,9,10-tetracarbonsäuredianhydrid mit Paraformaldehyd und Imidazol in $H_2SO_4$ hergestellt wurde. Anschließend gibt man 15 Teile einer 50 %igen handelsüblichen Harzseife zu und kühlt auf 0 bis 5 ° C ab. Zu dieser Mischung läßt man bei dieser Temperatur in 10 Minuten 158,8 Teile einer 31,9 %igen Monomethylamin-Lösung zutropfen. Man läßt 15 Minuten bei 0 bis 5 ° C nachrühren und tropft danach in 15 Minuten eine Lösung aus 28,5 Teilen wasserfreiem Calciumchlorid und 94,5 Teilen Wasser zu. Man rührt 1 Stunde bei 0 bis 5 ° C nach. Danach heizt man auf 80 ° C und rührt 2 Stunden bei 80 ° C nach. Anschließend saugt man bei 50 ° C ab, wäscht neutral und chloridfrei und trocknet bei 80 ° C. Man erhält 66 Teile der Verbindung der vorstehend genannten Formel mit n = 0,04, die im AM-Lack dunklere Färbungen liefert als die des unsubstituierten Pigmentes. Die Rheologie beträgt 5 im Vergleich zu 1.

**Beispiel 6**

50 Teile Perylen-3,4,9,10-tetracarbonsäuredianhydrid in Form des feuchten Preßkuchens werden in 1 441 Teilen Wasser angerührt. Danach werden 34,5 Teile Preßkuchen (entsprechend 5 Teilen trocken) der Verbindung der Formel

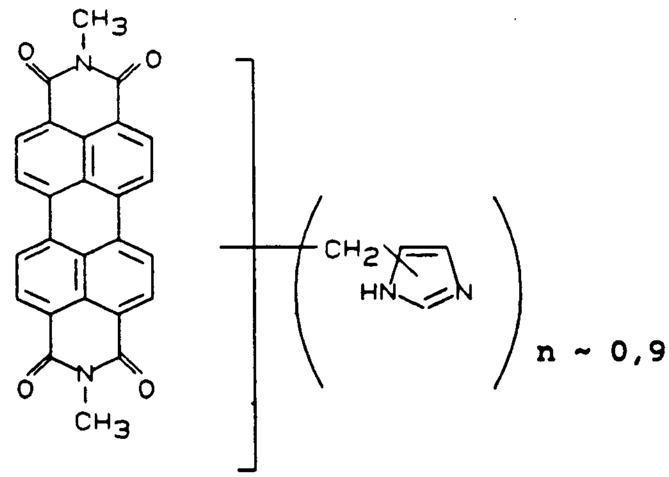

zugegeben, die durch Umsetzung von Perylen-3,4,9,10-tetracarbonsäure-N,N'-dimethylimid mit Paraformaldehyd und Imidazol in $H_2SO_4$ hergestellt wurde.

Anschließend gibt man 15 Teile einer 50 %igen handelsüblichen Harzseife zu und kühlt auf 0 bis 5 °C ab. Zu dieser Mischung läßt man bei dieser Temperatur in 10 Minuten 158,8 Teile einer 31,9 %igen Monomethylamin-Lösung zutropfen. Man läßt 15 Minuten bei 0 bis 5 °C nachrühren und tropft danach in 15 Minuten eine Lösung aus 28,5 Teilen wasserfreiem Calciumchlorid und 94,5 Teilen Wasser zu. Man rührt 1 Stunde bei 0 bis 5 °C nach. Danach heizt man auf 80 °C und rührt 2 Stunden bei 80 °C nach. Anschließend saugt man bei 50 °C ab, wäscht neutral und chloridfrei und trocknet bei 80 °C.

Man erhält 62,3 Teile der Verbindung der vorstehenden Formel mit n ~ 0,08, die im TSA-NAD-Lack dunklere Färbungen liefert als die des unsubstituierten Pigmentes. Die Rheologie beträgt 5 im Vergleich zu 1.

**Beispiel 7**

Man mischt 9 Teile Pigment Red 179 mit 1 Teil der Verbindung der idealisierten Formel

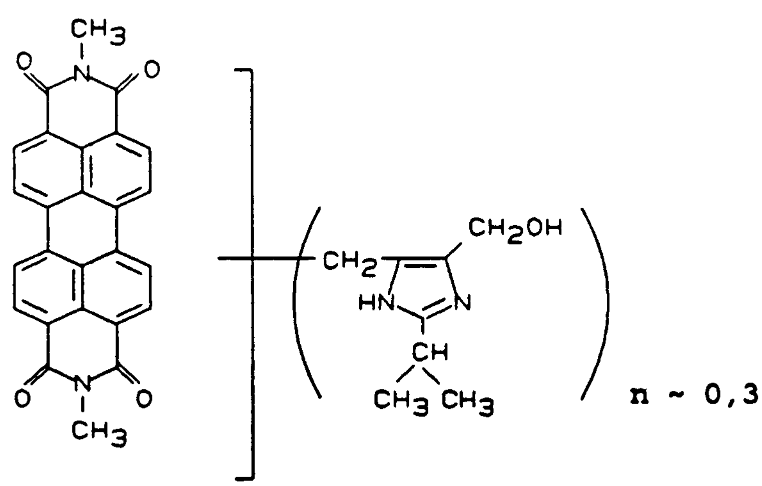

die durch Umsetzung von Perylen-3,4,9,10-tetracarbonsäure-N,N'-dimethylimid mit 2-Isopropyl-4,5-dihydroxymethylimidazol hergestellt wurde, in einer Labormühle.

Man erhält die Verbindung der vorstehend genannten Formel mit n ~ 0,03, die im TSA-NAD-Lack eine dunklere Nuance liefert als der Vergleich. Die Rheologie beträgt 5 im Vergleich zu 1.

**Beispiel 8**

**Herstellung**

14,4 Teile Kupferphthalocyanin werden bei Raumtemperatur in 200 Teile Schwefelsäuremonohydrat eingetragen Dann werden bei 0 ° C 3,4 Teile 5-Hydroxymethyl-4-methylimidazolhydrochlorid in Portionen eingerührt. Man rührt 1 Stunde bei 30 bis 35 ° C und dann 24 Stunden bei 100 ° C. Nach dem Abkühlen gibt man auf Eis und Wasser und saugt ab. Der Filterkuchen wird in Wasser angeschlämmt und mit Natronlauge auf pH = 10 gestellt. Man saugt ab, wäscht neutral und salzfrei und trocknet.

Gewonnen werden 16 Teile des Produktes der Formel

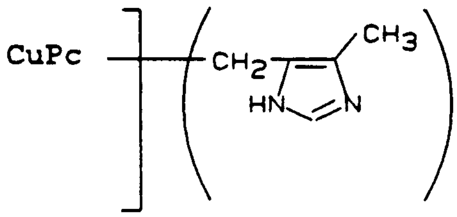

n ~ 0,9

8,0 Teile C.I. Pigment Blue 15 : 1 und 2,0 Teile der Verbindung der vorstehenden Formel werden in einer Labormühle vermahlen. Man erhält eine Verbindung der vorstehend genannten Formel mit n ~ 0,18.

Bei der Ausprüfung erhält man in 5 %iger Pigmentierung im AM-Lack folgende Ergebnisse:

| | Beispiel 8 | Vergleich |
|---|---|---|
| Viskosität<br>Glanz | 4,1 sec<br>74 | 23,5 sec<br>23 |

**Beispiel 9**

8,0 Teile C.I. Pigment Blue 15 : 3 und 2,0 Teile der Verbindung der Formel im Herstellungsbeispiel 8 werden in einer Labormühle vermahlen. Man erhält eine Verbindung der Formel

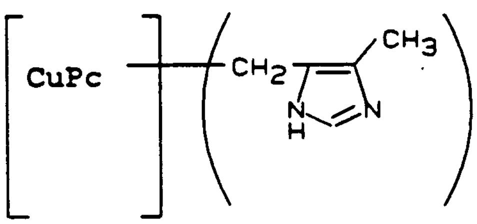

n ~ 0,18

Bei der Ausprüfung erhält man in 15 %iger Pigmentierung im AM-Lack folgende Ergebnisse:

| | Beispiel | Vergleich |
|---|---|---|
| Rheologie (15 %ige Pigmentierung)<br>Viskosität (5 %ige Pigmentierung)<br>Glanz | 5<br>3,2 sec<br>86 | 1 bis 2<br>6,1 sec<br>30 |

**Beispiel 10**

**Herstellung**

In 157 Teile Polyphophosphorsäure (83,5 % $P_2O_5$) werden bei 80 °C in 1 Stunde 17,4 Teile 2,5-Diphenylaminoterephthalsäure eingetragen und 30 Minuten verrührt. Dann werden in 20 Minuten 3,7 Teile 2-Methylimidazol eingetragen und 20 Minuten verrührt. Anschließend werden 2,1 Teile p-Formaldehyd zugegeben und 3 Stunden bei 80 bis 85 °C verrührt.

Danach wird in 30 Minuten auf 120 bis 125 °C geheizt und 2 Stunden bei dieser Temperatur nachgerührt. Danach wird die Lösung <auf Eis und Wasser hydrolysiert, abgesaugt und neutral gewaschen.

Man erhält in feuchter Form eine Verbindung der Formel

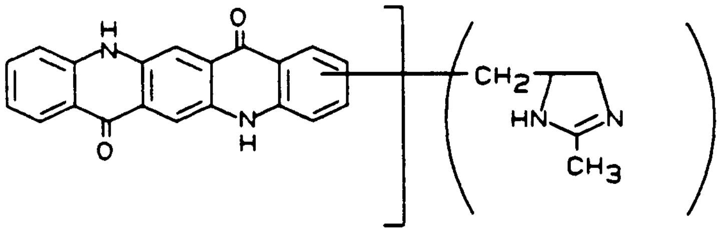

n ≲ 0,75

183,3 Teile eines feuchten Rohchinacridons (24 %ig), das durch Ringschluß von 2,5-Di-(4'-methylphenylamino)terephthalsäure in Polyphosphorsäure, Hydrolyse auf Wasser und Filtration erhalten wird, werden in 270 Teilen Isobutanol suspendiert und nach Zusatz von 5 g NaOH 33 %ig 3 Stunden bei 125 °C verrührt. Anschließend wird auf 60 °C abgekühlt und 10,2 Teile einer 34,5 %igen wäßrigen Paste eines Pigmentderivates der vorstehend genannten Formel zugesetzt. Danach wird unter Rühren in 2 Stunden das Isobutanol mit Wasserdampf abdestilliert, das Pigment durch Filtration isoliert, neutral gewaschen und getrocknet.

Man erhält ein Magenta-Pigment der Formel

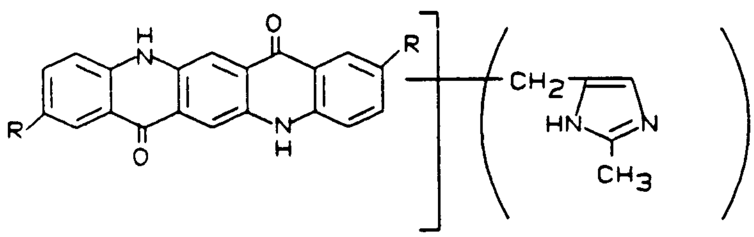

n ~ 0,055

R = $CH_3$, H

Im AM- und TSA-NAD-Lack erhält man transparente Volltonlackierungen mit einem klaren Farbton.

| AM-Lack | Beispiel 10 | Vergleich |
|---|---|---|
| Rheologie | 5 | 1 bis 2 |
| Viskosität | 3,4 sec | 6,2 sec |
| Glanz | 92 | 40 |

| TSA-NAD | Beispiel 10 | Vergleich |
|---|---|---|
| Rheologie | 5 | 1 bis 2 |
| Viskosität | 3,8 sec | 6,8 sec |
| Glanz | 84 | 10 |

**Beispiel 11**

Verwendet man statt des in Beispiel 10 eingesetzten 2,9-Dimethylchinacridons die gleiche Menge eines Chinacridonmischkristalls aus 3 Teilen 2,9-Dimethylchinacridon und 1 Teil Chinacridon als feuchtes Rohchinacridon und verfährt im übrigen wie in Beispiel 10 beschrieben, so erhält man ein Magenta-Pigment der Formel analog Beispiel 10 mit n ~ 0,055, das im AM-Lack hochtransparente Lackierungen gibt.

| | Beispiel 11 | Vergleich |
|---|---|---|
| Rheologie | 5 | 1 bis 2 |
| Viskosität | 2,9 sec | 4,9 sec |
| Glanz | 97 | 48 |

**Beispiel 12**

Zu 500 Teilen einer 8,8 %igen wäßrigen Pigmentsuspension der deckenden γ-Modifikation des unsubstituierten linearen Chinacridons werden bei 50 bis 60 °C unter Rühren 26,4 Teile einer wäßrigen 13,3 %igen Suspension eines Kondensationsprodukts aus 1 Mol unsubstituiertem Chinacridon und 0,95 Mol 4-Methyl-5-hydroxymethylimidazol, das durch Kondensation in $H_2SO_4$ hergestellt wurde, der Formel

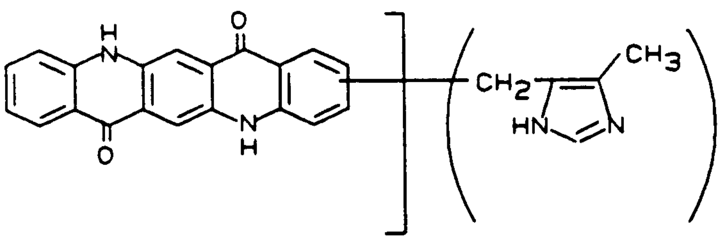

n ~ 0,85

gegeben und 2 Stunden verrührt. Danach wird das Pigment abfiltriert und getrocknet.

Man erhält eine Verbindung der vorstehenden Formel mit n ~ 0,063. Das auf diese Weise hergestellte blaustichigrote Pigment gibt im AM-Lack farbstärkere und etwas blauere Lackierungen als der Vergleich.

| | Beispiel 12 | Vergleich |
|---|---|---|
| Rheologie | 5 | 3 bis 4 |
| Viskosität | 2 sec | 2,4 sec |
| Glanz | 93 | 20 |

**Beispiel 13**

27,84 Teile eines Kondensationsprodukts aus 1 Mol 2,9-Dimethylchinacridon, 0,9 Mol 2-Methylimidazol und p-Formaldehyd, hergestellt in Schwefelsäure konz. bei 50 bis 70 °C, der Formel

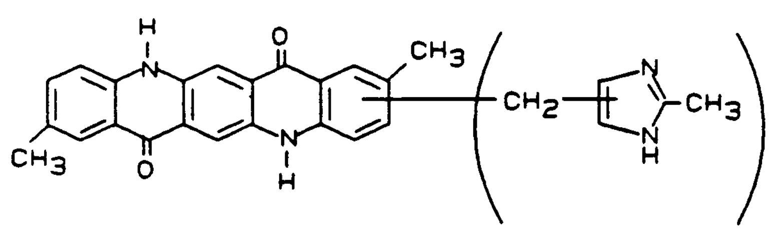

n ~ 0,45

läßt man als 8 %ige wäßrige Suspension bei 70 bis 80 °C zu 3000 Teilen einer Suspension, die 348 Teile pigmentäres 2,9-Dimethylchinacridon und 15 g NaOH enthält, zulaufen. Nach einstündigem Nachrühren wird das Pigment durch Filtration isoliert, neutral gewaschen und getrocknet.

Man erhält eine Verbindung der vorstehenden Formel mit n ~ 0,035.

Das Magenta-Pigment zeigt im AM-Lack besseres rheologisches und coloristisches Verhalten als das unsubstituierte Produkt.

| | Beispiel 13 | Vergleich |
|---|---|---|
| Rheologie | 5 | 1 bis 2 |
| Viskosität | 2,9 sec | 6,2 sec |
| Glanz | 94 | 40 |

**Beispiel 14**

In 500 Teile Polyphosphorsäure werden bei 120 °C 20 Teile Rohpigment C.I. Violet 23 (salzfrei) eingetragen. Nach einstündigem Rühren werden langsam 3 Teile 2-Hydroxymethylpyrrol zugesetzt. Anschließend wird 5 Stunden bei 120 °C gerührt. Die Reaktionslösung wird danach auf Eiswaser ausgetragen, mit konz. Natronlauge auf pH 10 gestellt und über Nacht stehengelassen. Anschließend wird der Niederschlag abgesaugt, mit Wasser neutral und salzfrei gewaschen und bei 50 °C getrocknet.

Man erhält 21,8 Teile des Pigmentderivates der Formel

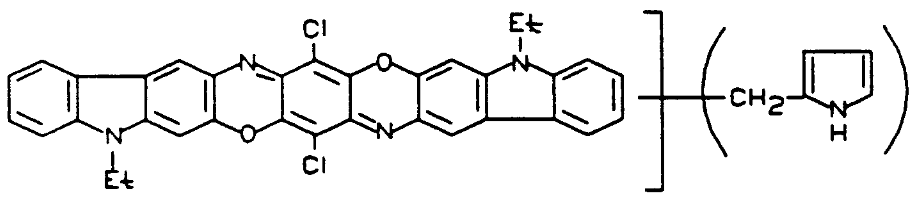

n ~ 0,7

180 Teile des durch Umsetzung von Tetrachlor-p-benzochinon mit 2 Mol 3-Amino-9-ethylcarbazol zum 2,5-Di-(9-ethylcarbazol-3-yl-amino)-3,6-dichlorbenzochinon-(1,4) und anschließenden Ringschluß zum Rohpigment C.I. Violet 23, C.I. 51319 (vgl. "Venkataraman" Band II (1952), Seiten 786 und 787) erhaltenen salzhaltigen Produktes( ~ 80 %ig) werden mit 14,4 Teilen der Verbindung der vorstehend genannten Formel versetzt und gemäß DE 2742575 (≙ US 4253839) Beispiel 3, einer Schwingmahlung (Präpigment) und einem Lösemittelfinish unterworfen.

Nach Entfernen des Solvens wird mit Wasser neutral und salzfrei gewaschen und das Produkt bei 50 °C getrocknet.

Man erhält 138 Teile eines Pigmentes der Formel

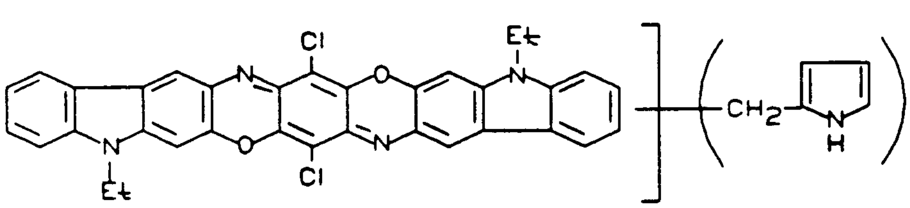

n ~ 0,063

Das erhaltene Pigment besitzt gegenüber dem unbehandelten Pigment eine wesentlich niedrigere Rheologie im AM-Lack und eine geringere Viskosität.

| | Beispiel 14 | Vergleich |
|---|---|---|
| Rheologie | 5 | 1 bis 2 |
| Viskosität | 4,9 sec | 7,1 sec |

**Beispiel 15**

Gemäß Beispiel 14 werden 20 Teile Rohpigment C.I. Violet 23 (salzfrei) und 3,5 Teile 2-Hydroxymethylthiophen zur Reaktion gebracht. Man erhält 22,3 Teile des Pigmentderivates der Formel

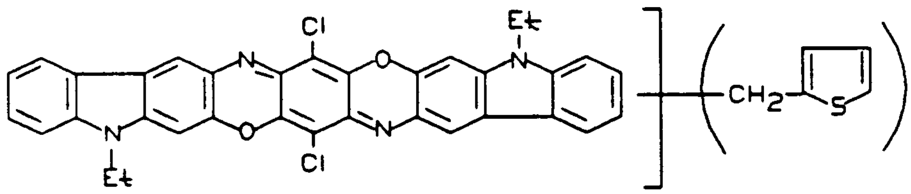

n ~ 0,7

180 Teile Rohpigment C.I. Violet 23 werden mit 14,4 Teilen der Verbindung der vorstehend genannten Formel versetzt und gemäß Beispiel 14 behandelt.

Man erhält 138 Teile eines Pigmentes der Formel

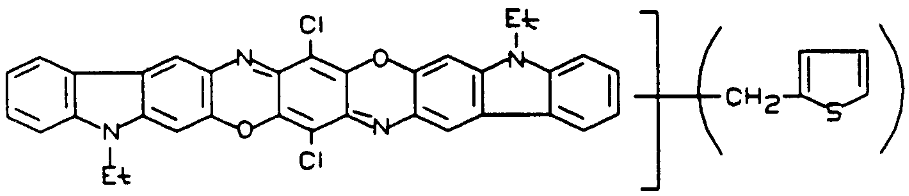

n ~ 0,063

Das erhaltene Pigment besitzt gegenüber dem Vergleich eine wesentlich bessere Rheologie und eine geringere Viskosität.

| | Beispiel 15 | Vergleich |
|---|---|---|
| Rheologie | 5 | 1 bis 2 |
| Viskosität | 2,5 sec | 7,1 sec |

**Beispiel 16**

Gemäß Beispiel 14 werden 20 Teile Rohpigment C.I. Violet 23 (salzfrei) und 3,9 Teile 2,5-Bishydroxymethylfuran zur Reaktion gebracht. Man erhält 23,4 Teile des Pigmentderivates der idealisierten Formel

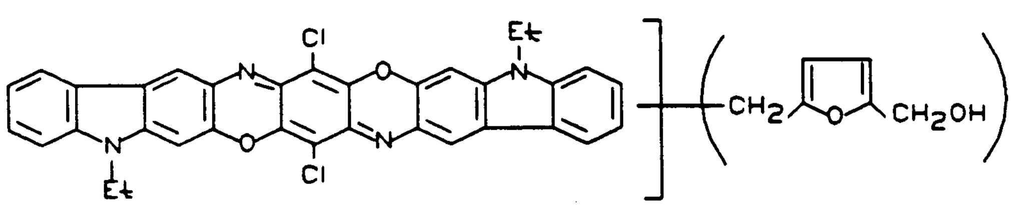

n ~ 0,9

180 Teile Rohpigment C.I. Violet 23 werden mit 14,4 Teilen der vorstehenden Formel versetzt und gemäß Beispiel 14 behandelt.

Man erhält 138 Teile eines Pigmentes der idealisierten Formel

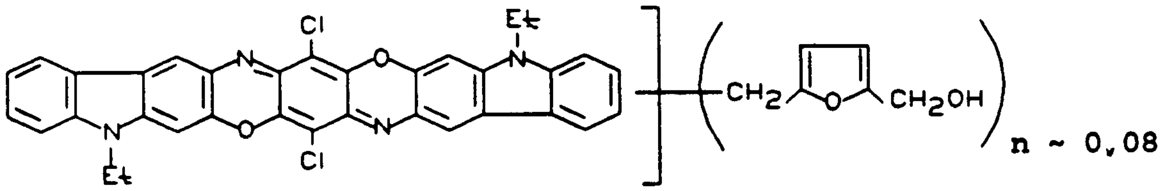

Das erhaltene Pigment besitzt gegenüber dem Vergleich eine wesentliche bessere Rheologie im AM-Lack und eine geringere Viskosität.

| | Beispiel 16 | Vergleich |
|---|---|---|
| Rheologie<br>Viskosität | 5<br>4,0 sec | 1 bis 2<br>7,1 sec |

**Beispiel 17**

Gemäß Beispiel 14 werden 60 Teile Rohpigment C.I. Violet 23 (salzfrei) in 1500 Teilen Polyphosphorsäure und 13,6 Teile 5-Hydroxymethyl-4-methylimidazolhydrochlorid zur Reaktion gebracht. Man erhält 65 Teile des Pigmentderivates der Formel (A)

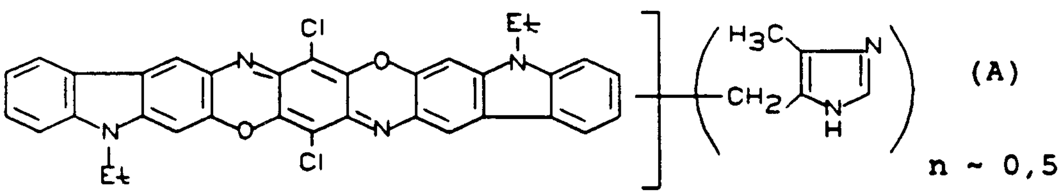

(A)

Die $^1$H-NMR-spektroskopische Untersuchung des Pigmentderivates liefert einen Derivatisierungsgrad von ~ 50 %. Grundlage für die Berechnung war das Integralverhältnis von $N\text{-}CH_2\text{-}\underline{CH_3}$ : Imidazolyl-$\underline{CH_3}$.

180 Teile Rohpigment C.I. Violet 23 werden mit 14,4 Teilen der Verbindung der vorstehend genannten Formel versetzt und gemäß Beispiel 14 behandelt. Man erhält 138 Teile eines Pigmentes der Formel (B)

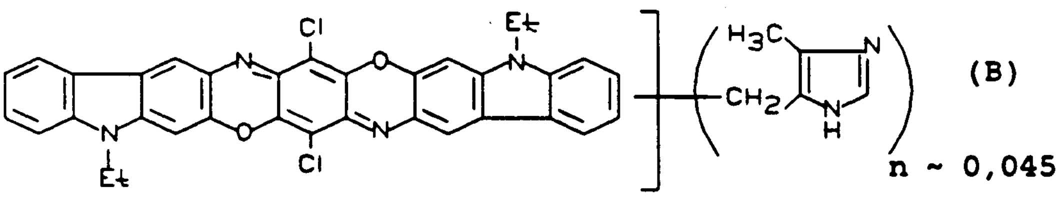

(B)

Das auf diese Weise hergestellte Dioxazinpigment zeichnet sich durch hervorragende rheologische Eigenschaften im AM- und TSA-NAD-Lack aus. Ferner besitzt es im Vergleich zu einem unter denselben Bedingungen ohne Pigmentderivat hergestellten Pigment eine wesentlich höhere Farbstärke, eine hohe Reinheit des Farbtons, hohe Transparenz, gute Dispergierbarkeit, Flockungsstabilität, eine niedrige Viskosität und einen hervorragenden Glanz.

| Beispiel 17 | | | | |
|---|---|---|---|---|
| | AM | TSA/NAD | Vergleich | |
| | | | AM | TSA/NAD |
| Rheologie<br>Viskosität<br>Glanz | 5<br>2,9 sec<br>85 | 5<br>4,3 sec<br>76 | 1 bis 2<br>7,1 sec<br>36 | 2 bis 3<br>11,6 sec<br>56 |

**Beispiel 18**

160 Teile Präpigment Violet 23 werden mit 12,8 Teilen des gemäß Beispiel 17 hergestellten Pigmentderivates versetzt und gemäß DE 2742575, Beispiel 3, einem Lösemittelfinish unterworfen. Man erhält 135 Teile eines Pigmentes, das ebenfalls die in Beispiel 17 aufgeführten Vorteile besitzt.

| Beispiel 18 | | | | |
|---|---|---|---|---|
| | AM | TSA/NAD | Vergleich | |
| | | | AM | TSA/NAD |
| Rheologie<br>Viskosität<br>Glanz | 5<br>3,0 sec<br>83 | 5<br>4,6 sec<br>74 | 1 bis 2<br>7,1 sec<br>36 | 2 bis 3<br>11,6 sec<br>56 |

**Beispiel 19**

50 Teile Pigment C.I. Violet 23, 51319, werden mit 5 Teilen des gemäß Beispiel 17 hergestellten Pigmentderivates versetzt und in einer Mühle mechanisch gemischt.

Man erhält 54,5 Teile eines Pigmentes, das im AM- und TSA-NAD-Lack im Vergleich zum unbehandelten Pigment Violet 23 die bei Beispiel 17 aufgeführten Vorteile besitzt.

| Beispiel 19 | | | | |
|---|---|---|---|---|
| | AM | TSA/NAD | Vergleich | |
| | | | AM | TSA/NAD |
| Rheologie<br>Viskosität<br>Glanz | 5<br>2,8 sec<br>83 | 5<br>3,4 sec<br>74 | 1 bis 2<br>7,1 sec<br>36 | 2 bis 3<br>11,6 sec<br>56 |

**Beispiel 20**

Gemäß Beispiel 14 werden 20 Teile Rohpigment C.I. Violet 23 (salzfrei) und 4,5 Teile 3-Hydroxymethylindol zur Reaktion gebracht. Man erhält 23,8 Teile des Pigmentderivates der Formel

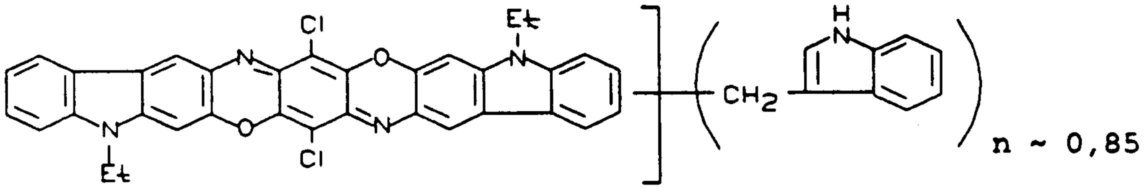

180 Teile Rohpigment C.I. Violet 23 werden mit 14,4 Teilen der Verbindung der vorstehend genannten Formel versetzt und gemäß Beispiel 14 behandelt. Man erhält 138 Teile eines Pigmentes der Formel

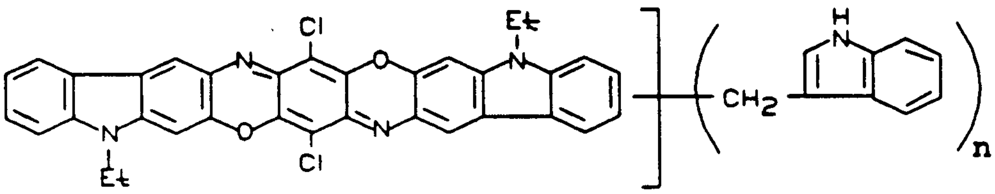

n ~ 0,076

Das erhaltene Pigment besitzt gegenüber dem unbehandelten Pigment C.I. Violet 23 eine niedrigere Rheologie, eine geringere Viskosität und einen höheren Glanzwert im AM-Lack.

| | Beispiel 20 | Vergleich |
|---|---|---|
| Rheologie | 5 | 1 bis 2 |
| Viskosität | 5,0 sec | 7,1 sec |
| Glanz | 70 | 36 |

**Beispiel 21**

Man legt 137 Teile Preßkuchen C.I. Pigment Violet 23 entsprechend 50 Teilen trocken vor. Man gibt danach 312 Teile Wasser und 21 Teile Isobutanol zu und mahlt diese Mischung 40 Minuten in einer Rührwerkskugelmühle, die mit Zirkonoxidperlen ∅ 1 bis 1,5 mm gefüllt ist. Danach gibt man 29 g Preßkuchen des Derivats aus Beispiel 17 (entsprechend 5 Teile trocken) zu und mahlt noch 20 Minuten. Danach siebt man das Mahlgut ab, wäscht die Zirkonoxidperlen mit Wasser nach und destilliert das Isobutanol bis 100 °C am Übergang ab. Anschließend saugt man ab, wäscht mit Wasser nach und trocknet das Pigment bei 80 °C.

Man erhält 53,9 g Pigment der Formel B (Beispiel 17) mit n ~ 0,045, das sich auszeichnet im Nitrocellulosetiefdruck durch seine hohe Farbstärke, Reinheit des Farbtons, gute Dispergierbarkeit und niedrige Viskosität. Außerdem zeigt das erf indungsgemäße Pigment keine Flockung, während der Vergleich stark flockt.

Im AM-Lack wird dieses Pigment wie folgt bewertet:

| | Beispiel 21 | Vergleich |
|---|---|---|
| Farbstärke | sehr farbstark | farbschwach |
| Rheologie | 5 | 3 bis 4 |
| Flockung | flockt nicht | flockt stark |
| Glanz | 85 | 52 |

Im TSA-NAD-Lack wird dieses Pigment wie folgt bewertet:

| | Beispiel 21 | Vergleich |
|---|---|---|
| Farbstärke | sehr farbstark | farbschwach |
| Rheologie | 5 | 4 |
| Flockung | flockt nicht | flockt stark |
| Glanz | 80 | 59 |

## Patentansprüche

1. Pigmente der allgemeinen Formel I

$$P\text{-}(CH_2\text{-}\overset{\displaystyle R_1}{\underset{\displaystyle R_3}{A}}\text{-}R_2)_n \qquad (I)$$

in welcher A einen fünf- oder sechsgliedrigen aromatischen, ggf. kondensierten Heterocyclus darstellt, welcher ein bis drei Heteroatome aus der Reihe Stickstoff und/oder Sauerstoff und/oder Schwefel enthält und welcher über ein Kohlenstoffatom an die Methylengruppe gebunden ist, $R_1$, $R_2$ Wasserstoff, Alkyl $C_1$-$C_4$, Alkylen $C_2$ oder Aryl bedeutet, wobei $R_1$ und $R_2$ gemeinsam auch einen aliphatischen oder aromatischen Ring darstellen können, $R_3$ Wasserstoff, Alkyl $C_1$-$C_4$, Hydroxyalkyl $C_1$-$C_3$, oder Alkylen $C_2$ bedeutet und wobei die Alkylgruppen linear oder verzweigt sein können, P den Rest eines polycyclischen Pigments oder eines Mischkristalls aus polycyclischen Pigmenten darstellt und n eine Zahl von 0,001 bis 0,2 darstellt.

2. Pigmente der Formel (I) gemäß Anspruch 1, dadurch gekennzeichnet, daß P für einen Anthrachinon-, Anthrapyrimidin-, Anthanthron-, Chinacridon-, Chinophthalon-, Diketopyrrolopyrrol-, Dioxazin-, Flavanthron-, Indanthron-, Isoindolin-, Isoindolinon-, Isoviolanthron-, Perinon-, Perylen-, Phthalocyanin-, Pyranthron- oder Thioindigo-Rest steht oder den Rest eines Mischkristalls aus den vorstehend genannten polyclischen Pigmenten darstellt.

3. Pigmente der Formel (I) gemäß Anspruch 1, dadurch gekennzeichnet, daß A für den Rest eines fünfgliedrigen aromatischen Heterocyclus aus der Reihe Furan, Thiophen, Pyrrol, Pyrazol, Thiazole, Oxazole, Triazole und Imidazol steht.

4. Pigmente der Formel (I) gemäß Anspruch 1, dadurch gekennzeichnet, daß A für den Rest eines kondensierten Heterocyclus aus der Reihe Thionaphthen, Benzoxazol, Benzthiazol, Benzimidazol, Benztriazol und Indol steht.

5. Pigmente der Formel (I) gemäß Anspruch 1, dadurch gekennzeichnet, daß n 0,01 bis 0,1 ist.

6. Verwendung der Pigmente nach mindestens einem der Ansprüche 1 bis 5 zum Pigmentieren hochmolekularer Materialien.

7. Verwendung der Pigmente nach mindestens einem der Ansprüche 1 bis 5 zum Pigmentieren hochmolekularer Materialien in Form plastischer Massen, Schmelzen, Spinnlösungen, Lacken, Anstrichfarben oder Druckfarben.

8. Verwendung der Pigmente nach mindestens einem der Ansprüche 1 bis 5 zum Pigmentieren von Einbrennlacken aus der Klasse der Alkydmelaminharz- oder Acrylmelaminharzlacke und von Zweikomponentenlacken auf Basis polyisocyanatvernetzbarer Acrylharze.

9. Verwendung der Pigmente nach mindestens einem der Ansprüche 1 bis 5 zum Pigmentieren von Druckfarben auf Basis Nitrocellulose.

## Claims

1. A pigment of the general formula I

$$P-(CH_2-\underset{\underset{R_3}{|}}{\overset{\overset{R_1}{|}}{A}}-R_2)_n \qquad (I)$$

where A is a five- or six-membered aromatic fused or unfused heterocycle which contains one to three hetero atoms from the series consisting of nitrogen and/or oxygen and/or sulfur and which is bonded to the methlyene group via a carbon atom, $R_1$ and $R_2$ are each hydrogen, alkyl $C_1$-$C_4$, alkylene $C_2$ or aryl, and together $R_1$ and $R_2$ may also be an aliphatic or aromatic ring, $R_3$ is hydrogen, alkyl $C_1$-$C_4$, hydroxyalkyl $C_1$-$C_3$, or alkylene $C_2$ with alkyl being linear or branched, P is the radical of a polycyclic pigment or of a mix-crystal of polycyclic pigments and n is a number from 0.001 to 0.2.

2. A pigment of the formula (I) as set forth in claim 1, wherein P is an anthraquinone, anthrapyrimidine, anthanthrone, quinacridone, quinophthalone, diketopyrrolopyrrole, dioxazine, flavanthrone, indanthrone, isoindoline, isoindolinone, isoviolanthrone, perinone, perylene, phthalocyanine, pyranthrone or thioindigo radical or is the radical of a mix-crystal of the aforementioned polycyclic pigments.

3. A pigment of the formula (I) as set forth in claim 1, wherein A is the radical of a five-membered aromatic heterocycle from the series consisting of furan, thiophene, pyrrole, pyrazole, thiazoles, oxazoles, triazoles and imidazole.

4. A pigment is the formula (I) as set forth in claim 1, wherein A is the radical of a fused heterocycle from the series consisting of thionaphthene, benzoxazole, benzothiazole, benzimidazole, benzotirazole and indole.

5. A pigment of the formula (I) as set forth in claim 1, wherein n is 0.01 to 0.1.

6. Use of a pigment as claimed in at least one of claims 1 to 5 for pigmenting high molecular weight materials.

7. Use of a pigment as claimed in at least one of claims 1 to 5 for pigmenting high molecular weight materials in the form of plastic materials, melts, spinning solutions, surface coatings, paints or printing inks.

8. Use of a pigment as claimed in at least one of claims 1 to 5 for pigmenting baking finishes of the class of the alkyd melamine or acrylic melamine resins or two-component coatings based on polyisocyanate-crosslinkable acrylic resins.

9. Use of a pigment as claimed in at least one of claims 1 to 5 for pigmenting printing inks based on nitrocellulose.

## Revendications

1. Pigments de formule générale I

$$P-(CH_2-\underset{\underset{R_3}{|}}{\overset{\overset{R_1}{|}}{A}}-R_2)_n \qquad (I)$$

dans laquelle A est un hétérocycle aromatique à cinq ou six chaînons, éventuellement condensé, qui contient un à trois hetéroatomes choisis parmi l'ensemble comprenant l'azote et/ou l'oxygène et/ou le soufre, et qui est lié au groupe méthylène par l'intermédiaire d'un atome d'oxygène, $R_1$ et $R_2$ sont chacun l'hydrogène ou un radical alkyle en $C_1$-$C_4$, alkylène en $C_2$ ou aryle, $R_1$ et $R_2$ pouvant aussi former ensemble un noyau aliphatique ou aromatique, $R_3$ est un hydrogène ou un radical alkyle en $C_1$-$C_4$, hydroxyalkyle en $C_1$-$C_3$ ou alkylène en $C_2$, les groupes alkyle pouvant être linéaires ou ramifiés, P est le résidu d'un pigment polycyclique ou d'un cristal mixte constitué de pigments polycycliques, et n est un nombre de 0,001 à 0,2.

**2.** Pigments de formule (I) selon la revendication 1, caractérisés en ce que P est un résidu d'anthraquinone, d'anthrapyrimidine, d'anthanthrone, de quinacridone, de quinophtalone, dicétopyrrolopyrrole, de dioxazine, de flavanthrone, d'indanthrone, d'isoindoline, d'isoindolinone, d'isoviolanthrone, de périnone, de pérylène, de phtalocyanine, de pyranthrone ou de thioindigo ou encore représente le résidu d'un cristal mixte constitué des pigments polycycliques mentionnés ci-dessus.

**3.** Pigments de formule (I) selon la revendication 1, caractérisés en ce que A est le résidu d'un hétérocyclique aromatique à cinq chaînons choisi parmi l'ensemble comprenant le furanne, le thiophène, le pyrrole, le pyrazole, les thiazoles, les oxazoles, les triazoles et l'imidazole.

**4.** Pigments de formule (I) selon la revendication 1, caractérisés en ce que A est le résidu d'un hétérocycle condensé choisi parmi l'ensemble comprenant le thionaphtène, le benzoxazole, le benzothioazole, le benzimidazole, le benzotriazole et l'indole.

**5.** Pigments de formule (I) selon la revendication 1, caractérisés en ce que n est compris entre 0,01 et 0,1.

**6.** Utilisation des pigments selon au moins l'une des revendications 1 à 5 pour pigmenter des matériaux à grande masse moléculaire.

**7.** Utilisation des pigments selon au moins l'une des revendications 1 à 5 pour pigmenter des matériaux à grande masse moléculaire sous forme d'une composition plastique, d'une masse fondue, d'une solution de filage, d'un vernis, d'une peintures ou d'une encre d'imprimerie.

**8.** Utilisation des pigments selon au moins l'une des revendications 1 à 5 pour pigmenter des vernis au four appartenant à la classe des vernis aux résines alkyde-mélamine ou acrylique-mélamine, ou de vernis à deux composants à base de résines acryliques réticulables aux polyisocyanates.

**9.** Utilisation des pigments selon au moins l'une des revendications 1 à 5, pour pigmenter des encres d'imprimerie à base de nitrocellulose.

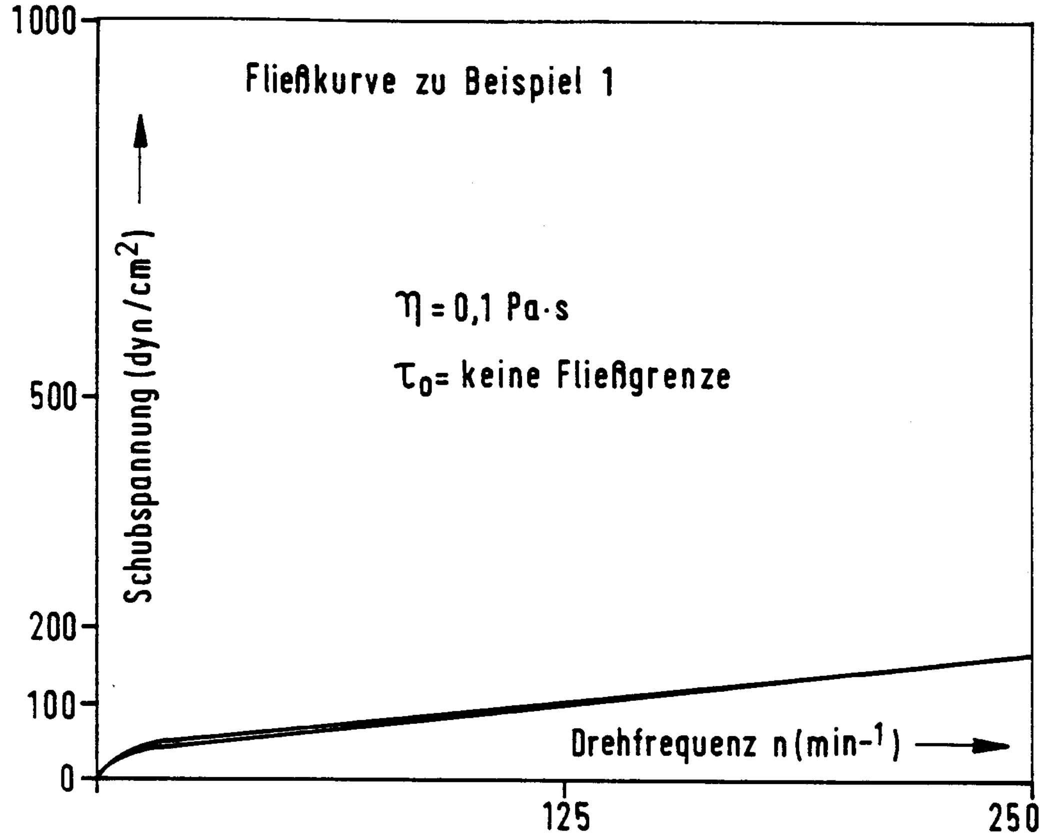
1000
500
200
100
0
Fließkurve zu Beispiel 1
Schubspannung (dyn/cm²)
η = 0,1 Pa·s
τ₀= keine Fließgrenze
Drehfrequenz n(min⁻¹)
125
250

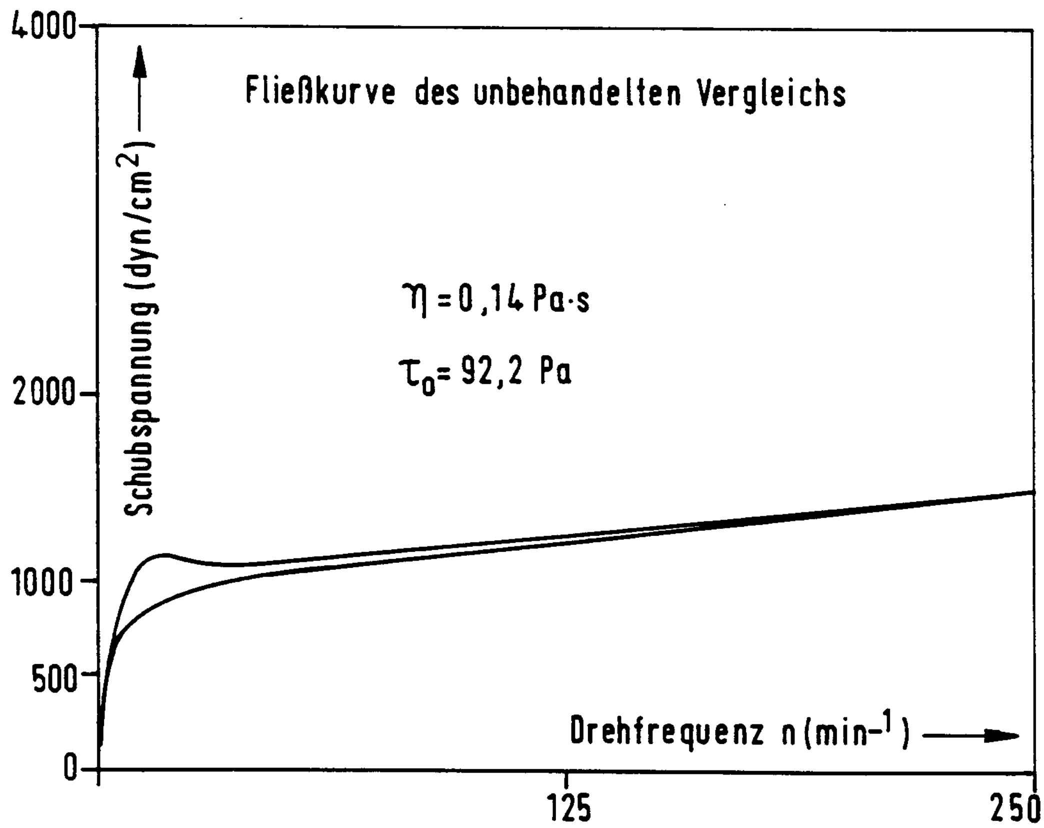
4000
2000
1000
500
0
Fließkurve des unbehandelten Vergleichs
Schubspannung (dyn/cm²)
η = 0,14 Pa·s
τ₀= 92,2 Pa
Drehfrequenz n(min⁻¹)
125
250

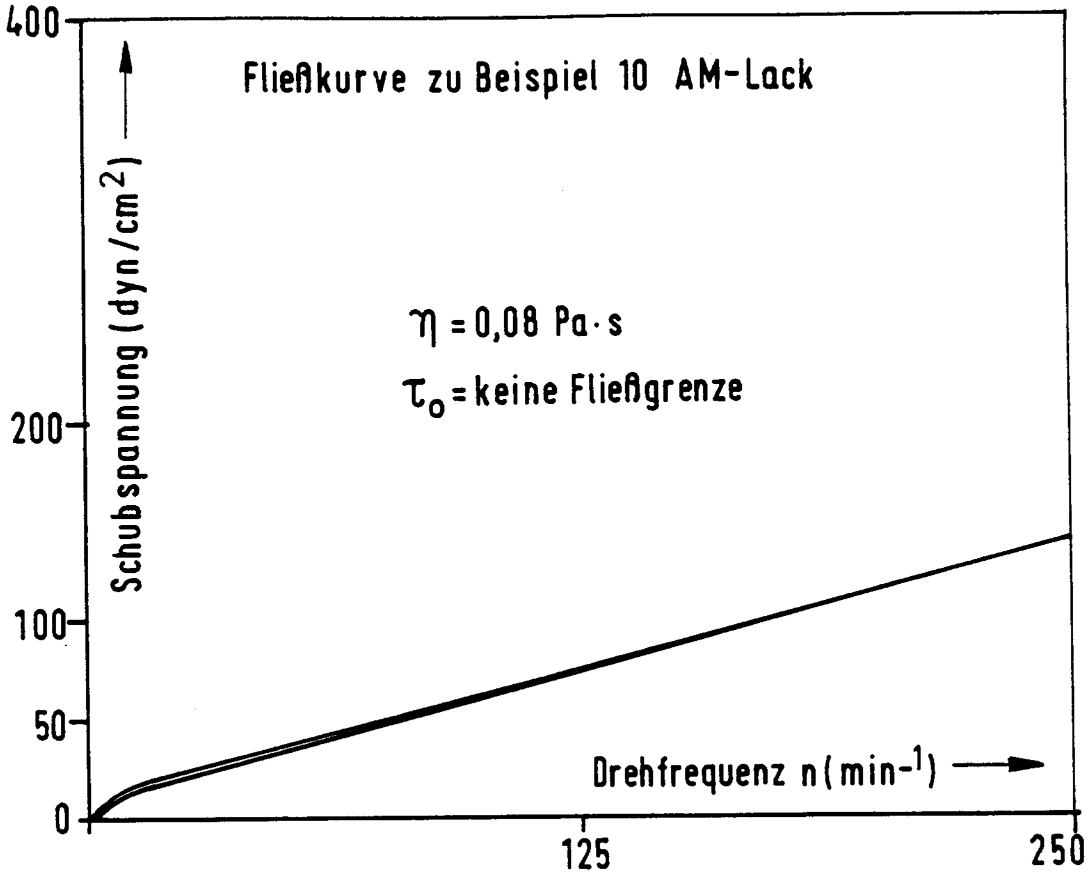
400
200
100
50
0
Schubspannung (dyn/cm²)
Fließkurve zu Beispiel 10 AM-Lack
η = 0,08 Pa·s
τ₀ = keine Fließgrenze
Drehfrequenz n(min⁻¹)
125
250

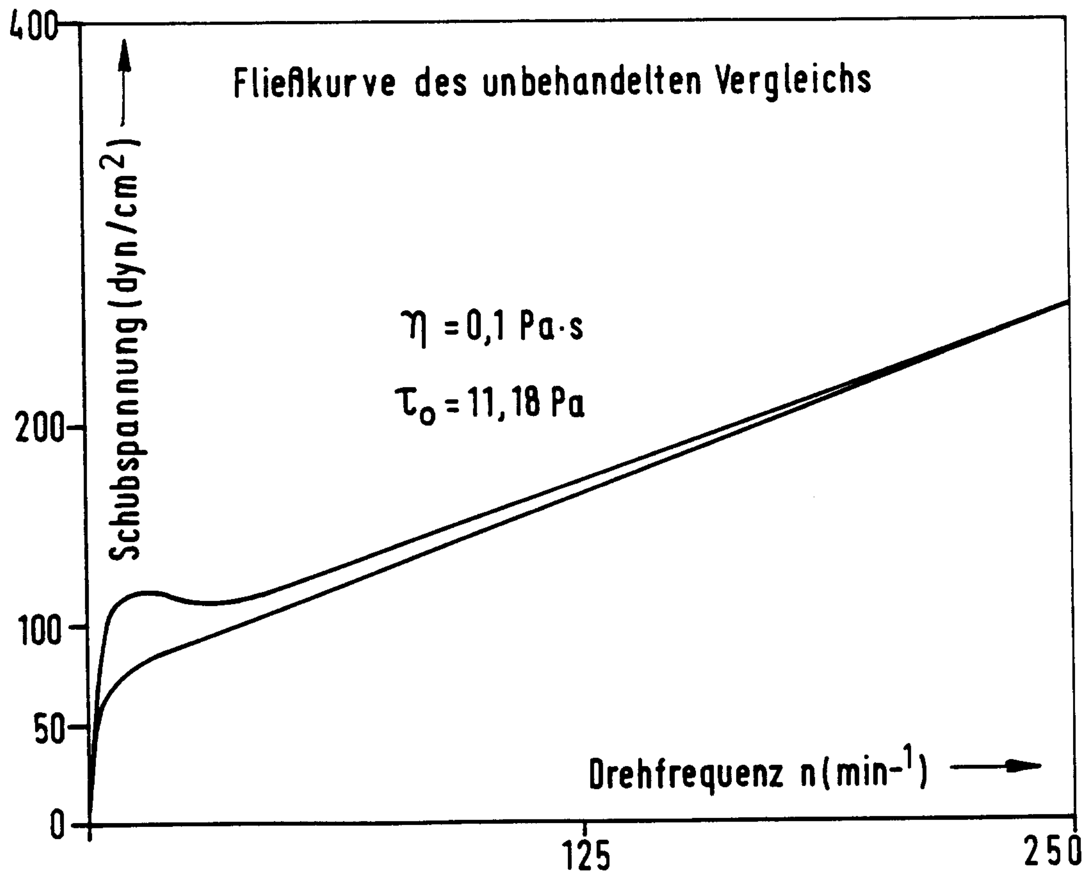
400
200
100
50
0
Schubspannung (dyn/cm²)
Fließkurve des unbehandelten Vergleichs
η = 0,1 Pa·s
τ₀ = 11,18 Pa
Drehfrequenz n(min⁻¹)
125
250

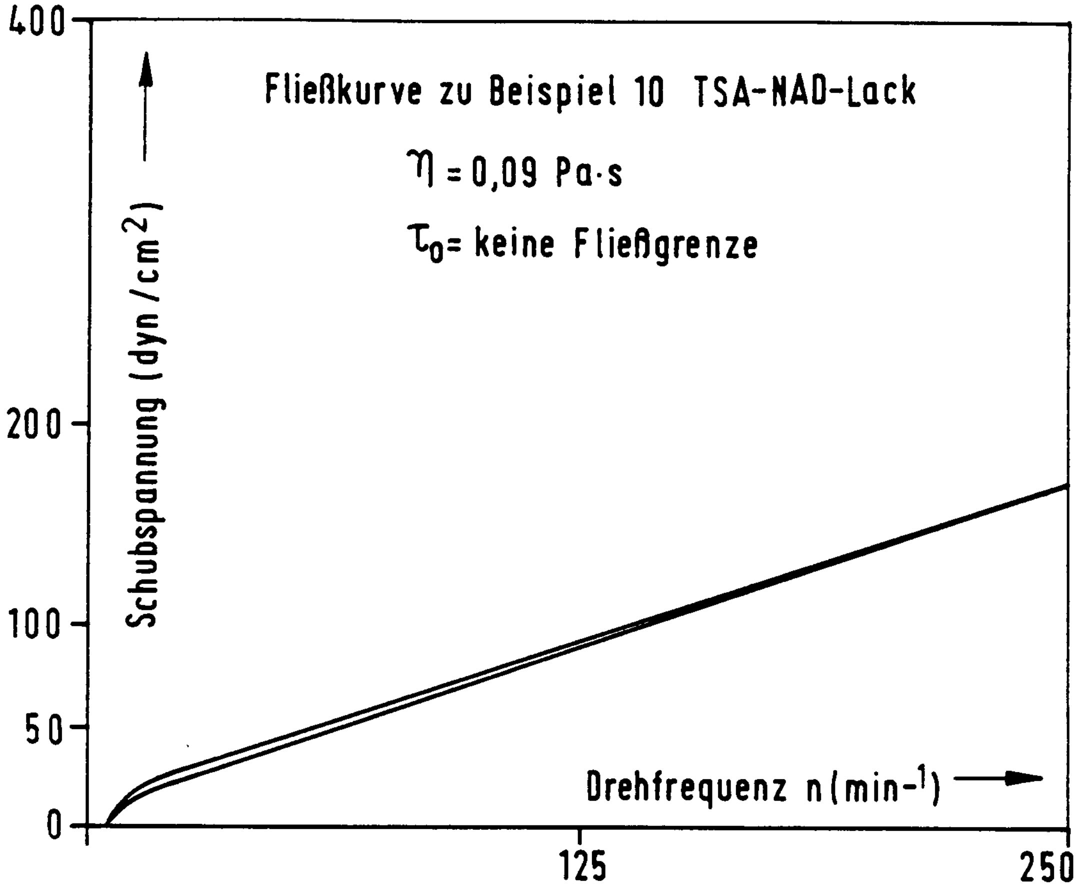
400
200
100
50
0
Fließkurve zu Beispiel 10 TSA-NAD-Lack
η = 0,09 Pa·s
τ0= keine Fließgrenze
Schubspannung (dyn/cm2)
Drehfrequenz n(min-1)
125
250

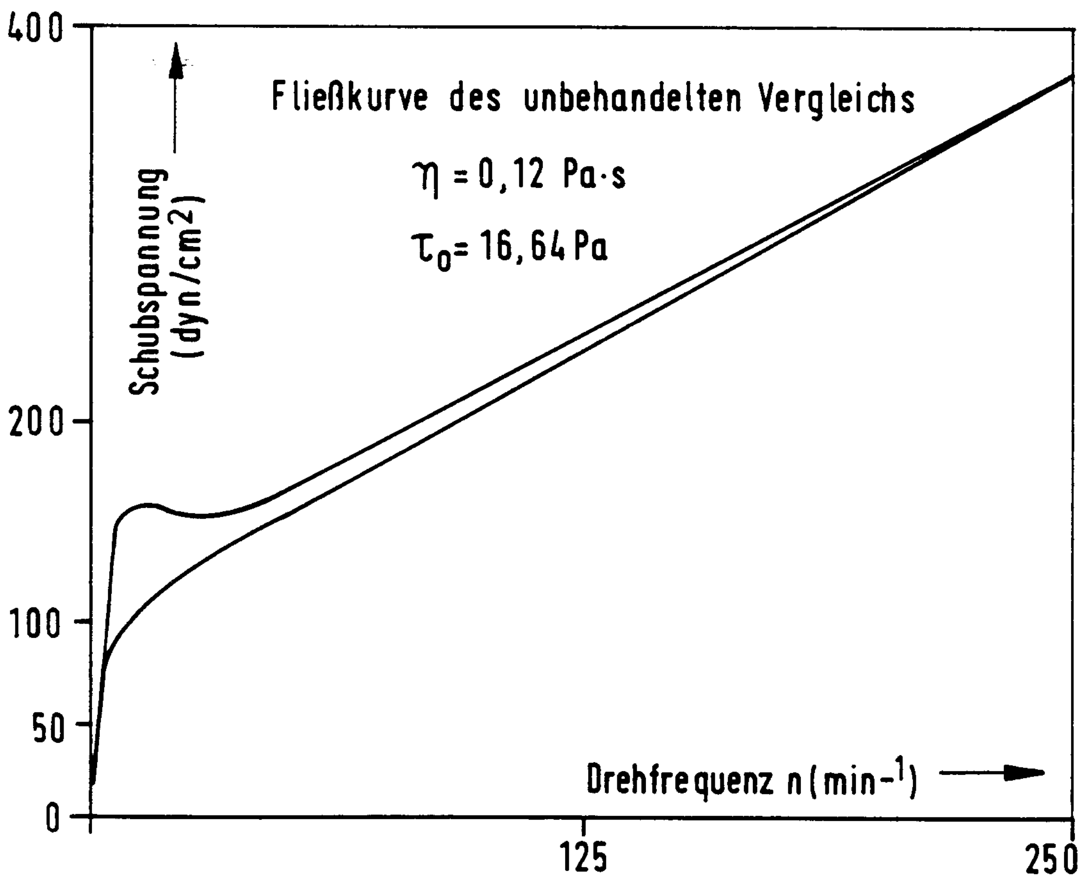
400
200
100
50
0
Fließkurve des unbehandelten Vergleichs
η = 0,12 Pa·s
τ0= 16,64 Pa
Schubspannung (dyn/cm2)
Drehfrequenz n(min-1)
125
250

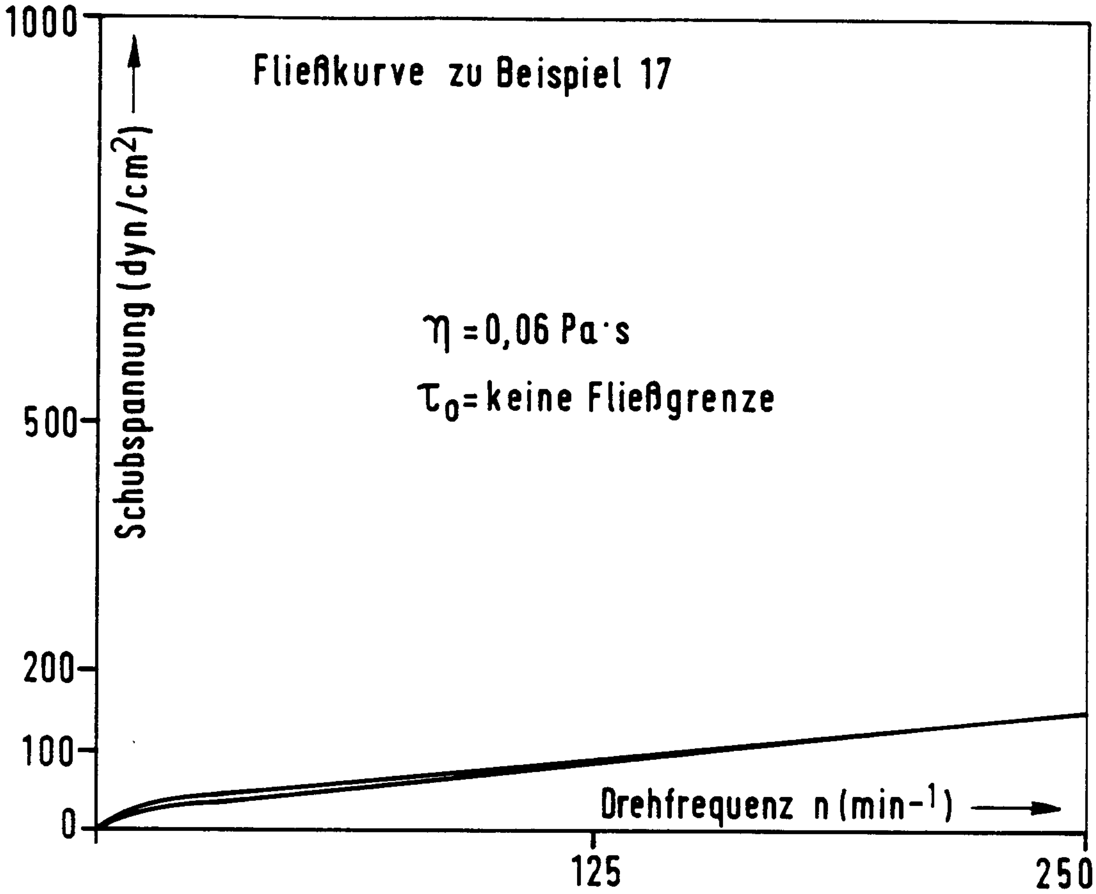
Fließkurve zu Beispiel 17
η = 0,06 Pa·s
τ0 = keine Fließgrenze
Schubspannung (dyn/cm2)
Drehfrequenz n (min-1)
1000
500
200
100
0
125
250

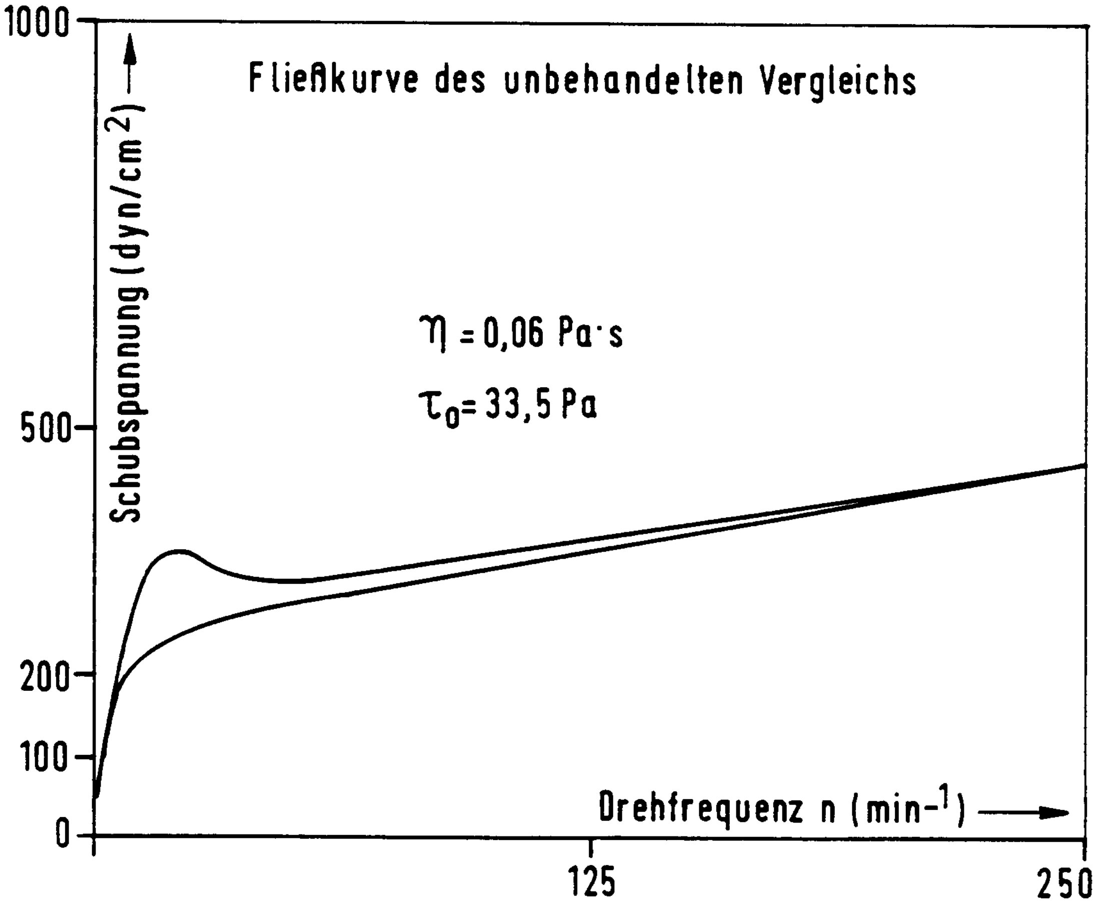
Fließkurve des unbehandelten Vergleichs
η = 0,06 Pa·s
τ0 = 33,5 Pa
Schubspannung (dyn/cm2)
Drehfrequenz n (min-1)
1000
500
200
100
0
125
250